# EUROPEAN PATENT APPLICATION

(11) **EP 1 909 039 A2**
(43) Date of publication of application: **09.04.2008**
(21) Application number: 07116825.6
(22) Date of filing: 20.09.2007
(51) Int. Cl.: F24C 15/32, A21B 3/04

(54) **Nebulizing device for ovens**

(30) Priority: 28.09.2006 IT MO20060306
(71) Applicant: ANGELO PO GRANDI CUCINE S.p.A., 41012 Carpi (MO) (IT)
(72) Inventor: Boscaino, Luigi, 41100 Modena (IT)
(74) Representative: Crugnola, Pietro

(57) **Abstract**

A nebulizing device for an oven (20) provided with a cooking chamber (21) and with fan means (23), comprises supplying means (3) for introducing into said cooking chamber (21) a liquid (10) to be nebulized and rotating nebulizing means (2), suitable for receiving said liquid (10) from said supplying means (3), the nebulizing means (2) comprising a plurality of blades (11) arranged for nebulizing at least partially said liquid (10) and for directing said liquid (11) towards said fan means (23) so as to be further nebulized.

## Description

The invention refers to a device for nebulizing liquids inside an oven, in particular for atomizing both the water used in cooking foods and washing liquids used for automatically cleaning the oven.

In mixed or combined ovens for professional use, for conventional and steam cooking, so-called "direct generation" ovens, the increase of the steam quantity inside the cooking chamber is obtained by directly introducing thereinto a flow of water, which is transformed into steam owing to the heat released by heating means placed in the chamber. The introduced water is used for adjusting the degree of humidity inside the oven and/or for generating the steam necessary for cooking.

In order to promote the transformation of the water into steam it is essential to achieve a nebulization of the water that is as fine as possible, especially when the temperature at which cooking occurs is not very high. For this purpose, the ovens are provided with nebulizing devices that atomise and distribute the water in different ways, generally in cooperation with a fan, which makes the air circulate inside the oven.

Some devices comprise a supplying pipe that is connected to the mains water supply and is provided with a delivering nozzle suitable for making the water drip, at a defined and adjustable rate, directly onto the blades or the hub of the fan. The blades nebulize the water, fragmenting and projecting the drops thereof to the heating means for vaporization.

Such devices do not ensure, however, correct and fine nebulization of the water, as the blades of the fan are not configured and designed to atomize and uniformly distribute the water.

Ovens are also known in which the flow of water is poured onto a suitable distributing element that is fixed to the hub of the fan and rotates therewith so as to spread and disperse the water into drops that are more or less fine.

European patent EP 244538 discloses a convection and steam combined oven in which the nebulization of the water inside the cooking chamber is carried out by means of a tumbler-shaped rotating distributing element, which is fixed to the fan hub. The nozzle pours the water inside the tumbler, which has an internal truncated conical cavity converging towards the tumbler opening. In this way, in use, with the tumbler arranged horizontally, inside the cavity a defined volume of water gathers, the part exceeding said volume flowing beyond the opening edge of the tumbler forms a water sheet that is reduced to droplets by centrifugal force. The blades of the fan contribute to further fragment the water sheet and to project the drops to the heating means for vaporisation.

In some ovens the distributing element consists of a hollow cylinder or drum, the side surface of which comprises a plurality of openings, such as holes or slots. The water poured inside the cylinder by the supplying pipe is projected outside through the aforesaid openings, nebulized by the centrifugal force and by the vacuum created by the suction of the fan.

These nebulization devices, although they are relatively efficient and cheap, have the drawback of being subject to deposits and encrustation due to the salts contained in the water that do not evaporate therewith. Limestone is particularly harmful, because by precipitating on the walls of the distributing element, after a relatively short time and depending on the calcium carbonate content of the water, it causes the openings to be blocked and/or the volume of the inner cavity of the element to be reduced. This produces a progressive reduction of efficiency of the nebulizing device and the need to replace the distributing element, with a cost increase due to the maintenance and arrest of the oven.

Furthermore, these distributing elements that are fixed to the fan hub may obstruct or perturb the air flow aspirated by the fan blades and cause flow resistances and reduction of the fan overall efficiency.

Nebulizing devices are also used in the ovens to perform automatic washing of the inner walls. In this case, a washing liquid, detergent and/or polishing, is finely nebulized inside the oven in such a way as to reach even the zones that are most difficult to clean and sanitise manually, in which food residues can accumulate and thus form a dangerous bacterial charge.

Typically, injectors are used to introduce the washing fluid that are suitably arranged inside the cooking chamber and are suitable to nebulize the fluid jet.

As illustrated in US patent US 6410890, the injectors can be arranged radially around the fan, in such a way as to direct the respective liquid jets in a direction opposite to the air flow generated by the fan.

Alternatively, as disclosed in European patent EP 801271, the injectors can be arranged at the fan hub in such a way as to spray the liquid into the fan suction zone.

By using the injectors it is possible to improve the overall nebulization of the liquid but high supply pressure of liquid is required, said pressure being the higher the finer is the atomisation to be achieved. In order to ensure this pressure, the whole supply circuit has to be properly sized and provided with powerful and expensive supply pumps. In addition to this, owing to the impurities in the water, the injectors may clog and/or, owing to the salts, become progressively encrusted, so as to lose efficiency.

An object of the invention is to improve nebulizing devices for ovens, in particular by increasing the efficiency and functionality thereof.

Another object is to manufacture a device allowing to nebulize and atomize effectively and appropriately inside an oven both water, for cooking foods and/or adjusting the degree of humidity inside the oven, and a washing liquid for automatically washing said oven.

A further object is to obtain a device the correct operation of which does not require high supply pressure of the liquid to be nebulized.

Still another object is to manufacture a robust and reliable device that is hardly subject to blockages and/or clogging due to impurities and/or salts present in the liquid, and in particular in the water.

A further object is to obtain a nebulizing device that is capable to improve the efficiency of fan means of the oven.

According to the invention, a nebulizing device is provided for an oven provided with a cooking chamber and with fan means, comprising supplying means for introducing into said cooking chamber a liquid to be nebulized and rotating nebulizing means, suitable for receiving said liquid from said supplying means, characterised in that said nebulizing means comprises a plurality of blades arranged for nebulizing at least partially said liquid and for directing said liquid towards said fan means so as to be further nebulized.

Owing to the invention, it is possible to obtain a nebulizing device suitable for effectively and appropriately nebulizing and atomising a liquid, such as water for cooking foods or a washing/polishing liquid for automatically washing the oven. The nebulizing means blades enable in fact the liquid flow exiting the supplying means to be fragmented and nebulized, projecting the liquid droplets towards the blades of fan means for further fragmenting and nebulization. The nebulization of the liquid is thus achieved in two successive steps: a pre-atomisation performed by nebulizing means and a final atomisation performed by fan means.

Shape and dimensions of supplying means ensure the absence of blockages and/or clogging due to deposits of limestone and/or impurities that may be present in the liquid. Furthermore, possible encrustation or deposits on the blades of the dispensing means do not compromise nebulization functionality and efficacy of the device.

Owing to shape and arrangement of the blades of nebulizing means, which generate a vacuum in the air flow at an inlet section of fan means, it is also possible to obtain a noticeable improvement in the operating efficiency thereof and thus a better circulation of the mixture of nebulized liquid and air in the oven.

The invention can be better understood and carried into effect with reference to the attached drawings, which illustrate an embodiment thereof by way of non-limiting example, in which:
Figure 1 is a schematic front view of the nebulizing device of the invention in association with an oven;
Figure 2 is an enlarged partial view of Figure 1, showing nebulizing means and supplying means of a liquid to be nebulized;
Figure 3 is a partial section according to plane III-III of Figure 2;
Figure 4 is an enlarged and partial perspective view of the device in Figure 1, showing nebulizing means and fan means;
Figure 5 is an enlarged perspective view of nebulizing means of the device in Figure 1;
Figure 6 is a perspective view of an embodiment of nebulizing mean in Figure 5;
Figure 7 is an enlarged and partial perspective view of an embodiment of the device in Figure 1;
Figure 8 is a schematic partial plan view of the device in Figure 7;
Figure 9 is a schematic view of an embodiment of the device in Figure 1 in association with an oven.

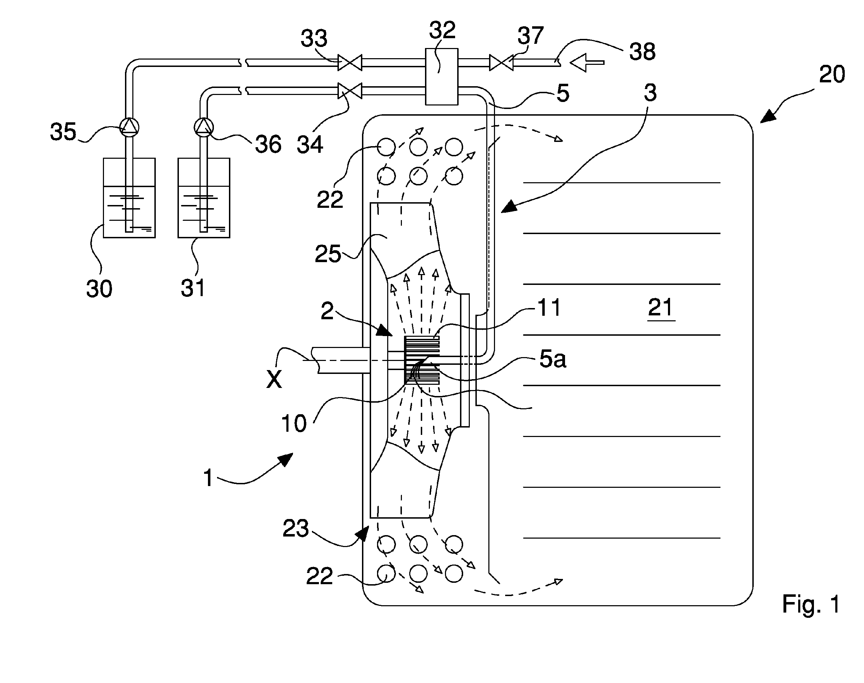

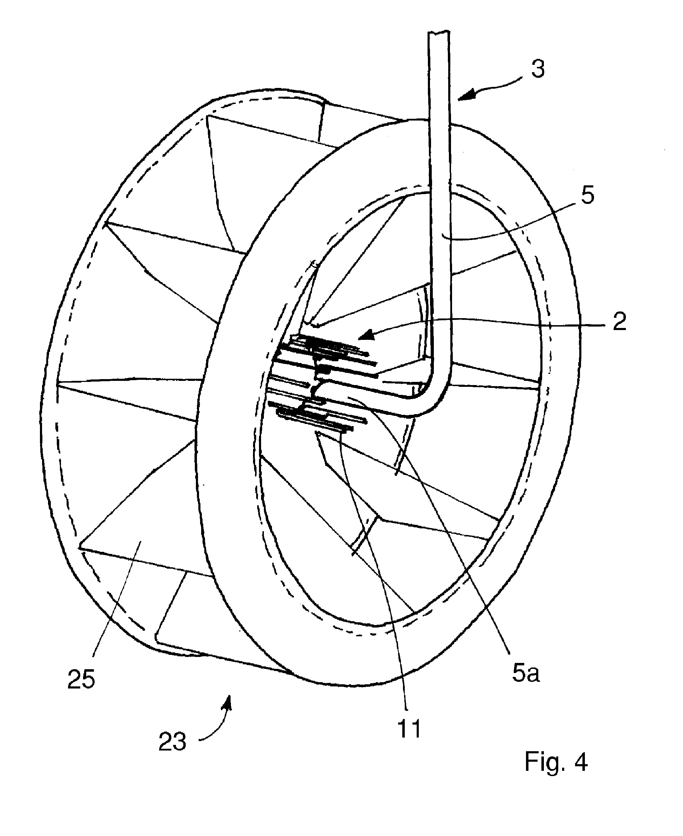

With reference to Figures 1 to 5, a device 1 is illustrated for nebulizing a liquid 10 inside an oven 20 of known type which comprises a cooking chamber 21, heating means 22 and fan means 23.

The device 1 comprises nebulizing means 2 provided with a plurality of blades 11 and rotatably mounted inside the blading 25 of fan means 23, at a hub 24 thereof, in which the air inlet or suction section is located. In particular, the nebulizing means 2 is integrally fixed, by a pin 4, to the hub 24 of fan means 23, in such a way as to rotate therewith around a rotation axis X.

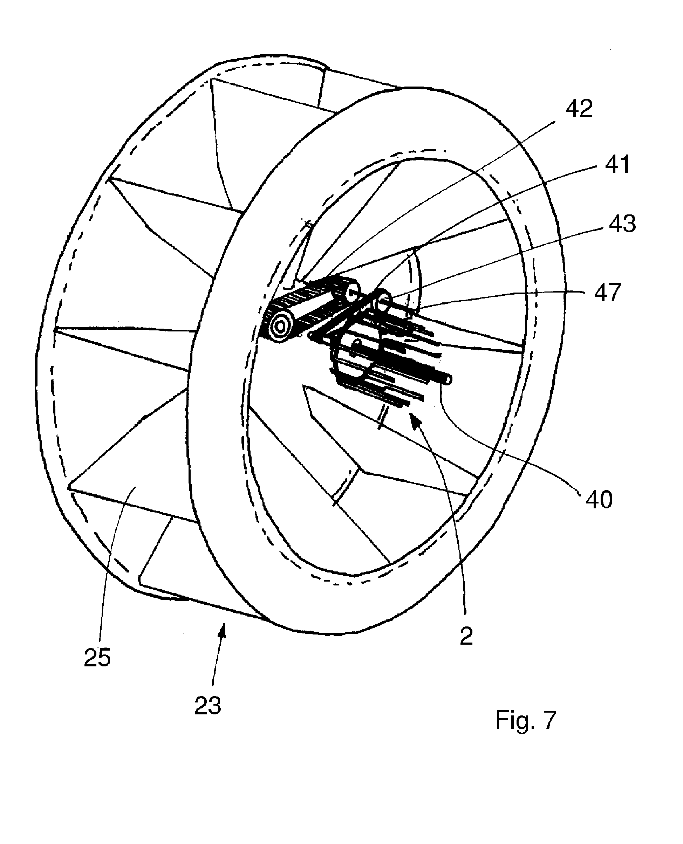

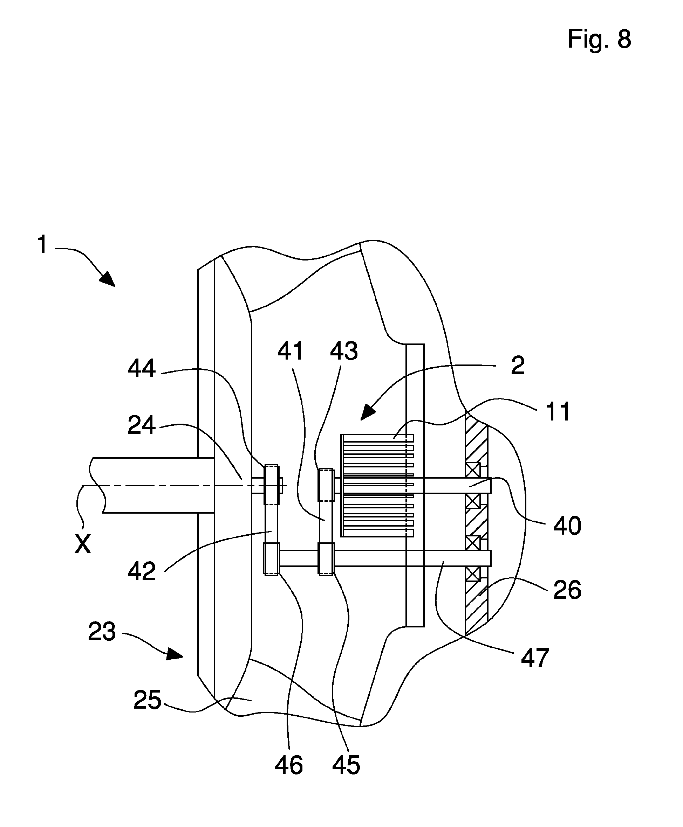

With reference to Figures 7 and 8, an embodiment of device 1 is illustrated in which the nebulizing means 2 is rotatably connected to a frame 26 of the oven 20 by a first shaft 40 and is rotated by fan means 23 by driving means comprising belts 41, 42 and pulleys 43, 44, 45, 46, for example cylindrical toothed pulleys. In particular, a first pulley 43 is mounted at an end of the first shaft 40, whilst a second pulley 44 is mounted at an end of hub 24.

A second shaft 47 is provided that is rotatably supported by the frame 26 of the oven 20 and arranged for supporting a third pulley 45 and a fourth pulley 46. A first belt 41 connects the first pulley 43 and the third pulley 45, whilst a second belt 42 connects the second pulley 44 to the fourth pulley 46. The diameter or number of teeth of the pulleys can be suitably selected in such a way as to obtain a specified transmission ratio. In particular, this ratio is a gearing-up ratio to increase the rotation speed of the nebulizing means 2 and obtain better nebulization of the liquid 10.

Another embodiment of device 1, which is not shown, is provided that differs in that it comprises conical smooth pulleys arranged for making a variable transmission ratio between nebulizing means 2 and fan means 23.

In a further embodiment of device 1, which is not shown, pulleys and belts are replaced by cogwheels engaging one another.

The device 1 further comprises supplying means 3 of the liquid to be nebulized arranged for conveying to nebulizing means 2 said liquid 10 coming from an external source consisting, for example, of tanks 30, 31, and/or of a mains water supply 38.

The supplying means 3 comprises at least a conduit 5 suitable for pouring the liquid 10 onto the blades 11. The conduit 5 has an outlet end 5a that is inserted inside the blading of the nebulizing means 2, i.e. in a chamber defined by blades 11.

In an embodiment of device 1, which is not shown, the outlet end 5a of conduit 5 comprises a nozzle or injector having a calibrated passage section for precisely controlling the flow of water delivered into the cooking chamber 21.

The conduit 5 is supplied by a manifold 32 connected by respective valves 33, 34 and pumping means 35, 36 to tanks 30, 31 containing washing liquids for cleaning and sanitising internal surfaces of oven 20. For example, a first tank 30 containing water and/or polishing liquid and a second tank 31 containing a washing liquid are provided.

Furthermore, the manifold 32 is connected by a respective further valve 37 to an external source of water 38, for example a mains water supply, in order to introduce into the cooking chamber 21 water required for generating steam/humidity.

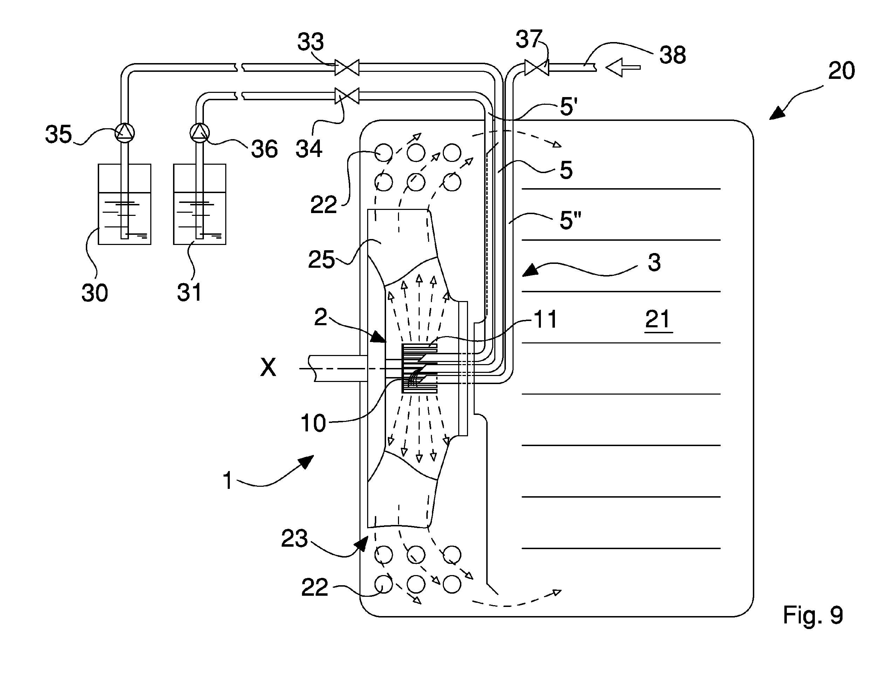

In the embodiment illustrated in Figure 9, the device 1 is devoid of manifold and comprises three conduits 5, 5', 5" each of which is connected respectively to the first tank 30, to the second tank 31 and to the mains water supply 38.

The device 1 may also be devoid of a connection to the mains water supply 38 and be suitable only for automatic washing of the cooking chamber 21. In this case, there are provided an embodiment of device 1, which is not shown, having a manifold and a single conduit, and a further embodiment, which is not shown, devoid of manifold and having separate conduits for the two tanks.

A further embodiment of device 1 is also provided, which is not shown, devoid of tanks and respective conduits and therefore suitable for delivering to the cooking chamber 21 water taken from the mains water supply, in order to generate steam/humidity.

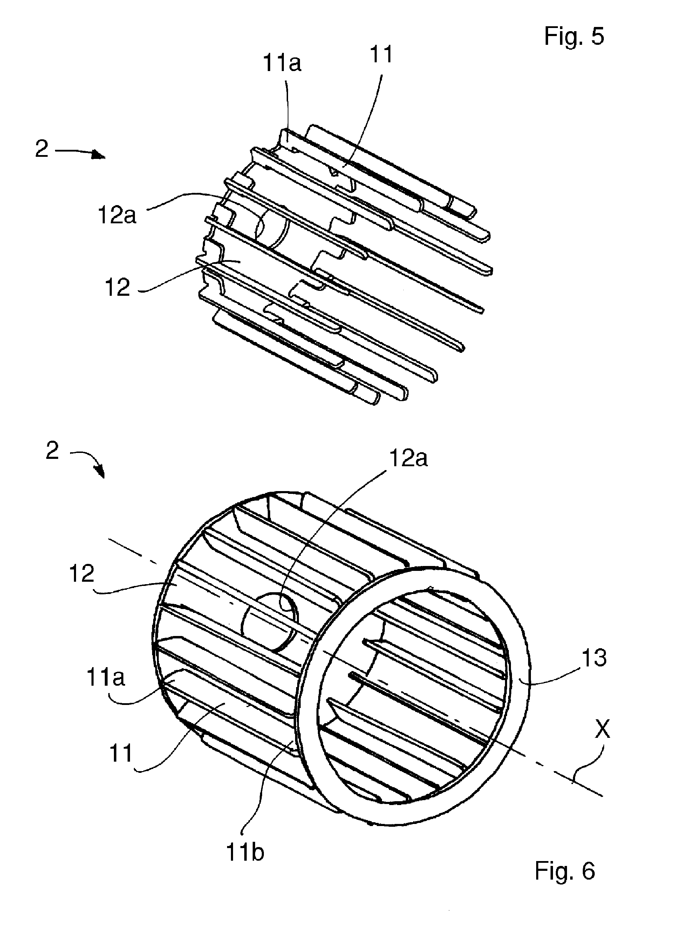

The nebulizing means 2, as illustrated in detail in Figure 5, comprises a flat and almost circular disc-shaped supporting element 12 that is suitable for peripherally supporting the blades 11, having a straight, flat and elongated shape. In particular, each blade 11 is cantileverly fixed to said supporting element 12, a first end 11a of said blade 11 being connected to a peripheral edge of said supporting element 12. The blades 11 are parallel to the rotation axis X, are angularly spaced from one another and are arranged on radial planes passing through the rotation axis X. The blades 11 are arranged along a substantially cylindrical surface, in such a way as to form an internal chamber suitable for receiving the outlet end 5a of the conduit 5.

In an embodiment of device 1 which is not shown, the blades 11 of nebulizing means 2 are fixed to the supporting element 12 with a defined tilt angle with respect to the radial direction.

In a further embodiment of device 1 which is not shown, the blades 11 have an elongated and twisted shape, to give greater turbulence to the air flow.

The supporting element 12 is provided with a hole 12a for connection to the pin 4.

In still another embodiment of device 1 illustrated in Figure 6, the nebulizing means 2 is configured as a "squirrel cage" and comprises a flat and annular connecting element 13 that is arranged for connecting second ends 11b of blades 11.

During operation of oven 20, when it is desired to increase the quantity of steam in the cooking chamber 21, water is introduced inside the oven 20 through the supplying means 3 in communication with the mains water supply 38.

The water flow exiting the outlet end 5a of conduit 5, continuously or discontinuously by drops, hits the blades 11 of rotating nebulizing means 2 and is fragmented, nebulized by the latter and 360° projected to the exterior, against the blades 25 of fan means 23, through the effect of centrifugal force. The water drops generated by the rotation of nebulizing means 2 are thus further fragmented and nebulized into drops of finer dimensions.

Nebulization of water is thus effectively achieved in two subsequent steps: a pre-atomisation step, achieved by nebulizing means 2, and a final atomisation step performed by fan means 23.

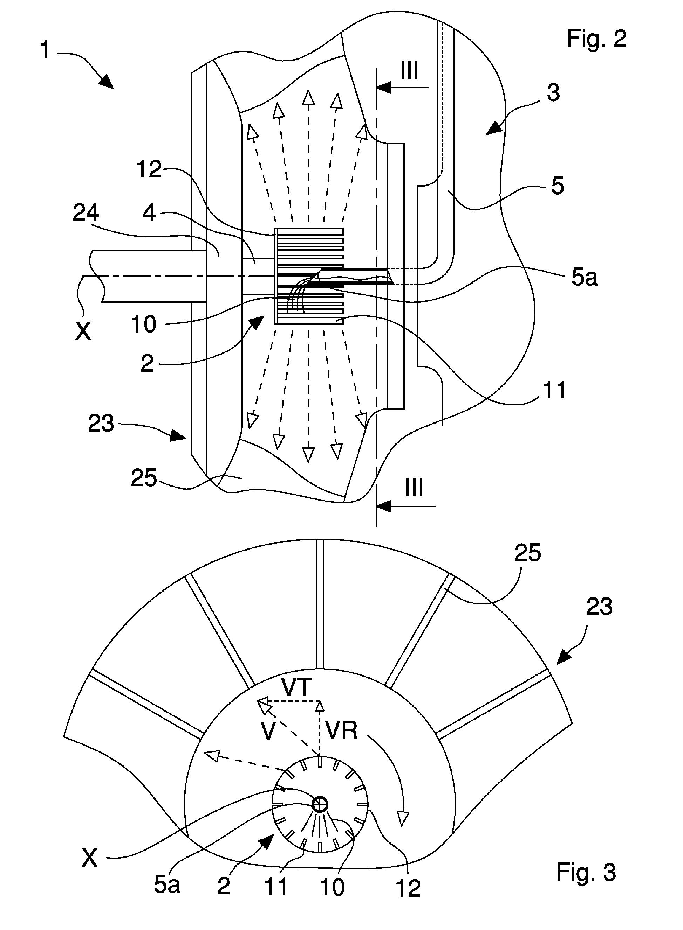

The nebulized drops thrown by the blades 11 move along a trajectory that is tilted with respect to the radial direction as they have a speed V obtained from a component of radial speed V_{R}, i.e. directed orthogonally to the rotation axis X, and a component of tangential speed V_{T}, directed tangentially to a circumference passing through the blade 11 and centring on the rotation axis X (Figure 3). This tilted trajectory ensures excellent impact with the blades 25 of the fan means 23 and better distribution.

The speed of drops can be varied, with the same rotation speed of nebulizing means 2, also by acting on the tilt angle of blades 11 and/or the shape thereof.

The mixture of nebulized water and air is then conveyed to the heating means 22 that surrounds the fan means 23 and transforms the water into steam.

The supply pressure requested to introduce the water by the supplying means 3 into the oven is not high, but has a value that is sufficient to overcome the flow resistances of supplying means 3 and to provide the required water flow.

Conduit 5 has dimensions that are such as to be unlikely subject to obstructions because of deposit of salts contained in the water.

Similarly, encrustations and deposits of limestone scale on the blades 11 of nebulizing means 2 do not compromise the functionality and efficacy of nebulization.

Nebulizing means 2 is further made of material resistant to high temperatures and to corrosion, such as for example stainless steel or plastics.

Nebulizing device 1 can also be used in the automatic washing step of oven 20 for nebulizing inside the latter a washing liquid, such as water and/or washing liquid and/or polishing liquid. In this case, supplying means 3 introduces the washing liquid inside the oven, taking it from tanks 30, 31.

The liquid is atomised by nebulizing means 2 and by fan means 23 according to the operation explained in the case of water. Owing to the fine nebulization of washing liquid that is achievable with the device 1 of the invention, it is also possible to reach zones that are more difficult to clean and sanitise, in which food elements may gather and form dangerous bacterial charges.

The use of nebulizing device 1 considerably improves the operating efficiency of fan means 23. In effect, the blades 11 of nebulizing means 2, which are arranged radially or tilted, by rotating generate at the inlet section of fan means 23 a vacuum in the air flow that improves the efficiency of said fan means 3. It is possible to obtain better circulation and distribution of the mixture of nebulized liquid and air in the cooking chamber 21.

## Claims

1. Nebulizing device for an oven (20) provided with a cooking chamber (21) and with fan means (23), comprising supplying means (3) for introducing into said cooking chamber (21) a liquid (10) to be nebulized and rotating nebulizing means (2), suitable for receiving said liquid (10) from said supplying means (3), **characterised in that** said nebulizing means (2) comprises a plurality of blades (11) arranged for nebulizing at least partially said liquid (10) and for directing said liquid (11) towards said fan means (23) so as to be further nebulized.

2. Device according to claim 1, wherein said nebulizing means (2) is placed at a hub (24) of said fan means (23).

3. Device according to claim 2, wherein said nebulizing means (2) is connected to said hub (24).

4. Device according to claim 1 or 2, wherein said nebulizing means (2) is rotatably supported by frame means (26) of said oven (20) and is rotated by said fan means (23) by driving means (41, 42, 43, 44, 45, 46).

5. Device according to claim 4, wherein said driving means comprises belt means (41, 42) and pulley means (43, 44, 45, 46).

6. Device according to any preceding claim, wherein said nebulizing means (2) rotates around a rotation axis (X) coinciding with, or parallel to, a respective rotation axis of said fan means (23).

7. Device according to any preceding claim, wherein said nebulizing means (2) comprises a supporting element (12) peripherally supporting said plurality of blades (11).

8. Device according to claim 7, as appended to claim 3, wherein said supporting element (12) is fixed to said hub (24) by a pin (4).

9. Device according to claim 8, as claim 7 is appended to claim 6, wherein said supporting element (12) has a flat and almost circular shape and is fixed to said pin (4) that is substantially orthogonal to said rotation axis (X).

10. Device according to any one of claims 7 to 9, wherein said blades (11) are fixed radially to said supporting element (12), angularly spaced from one another.

11. Device according to any one of claims 7 to 10, as claim 7 is appended to claim 6, wherein said blades (11) are substantially parallel to said rotation axis (X).

12. Device according to claim 11, wherein said blades (11) are fixed to said supporting element (12) in such a way as to make a substantially cylindrical blading.

13. Device according to according to any one of claims 7 12, wherein each blade (11) is fixed at a respective first end (11a) to said supporting element (12).

14. Device according to claim 13, wherein said nebulizing means (2) comprises a connecting element (13) suitable for connecting second ends (11b) of said blades (11).

15. Device according to claim 14, wherein said connecting element (13) has a substantially annular flat shape.

16. Device according to any preceding claim, wherein said blades (11) have a flat and elongated shape.

17. Device according to any preceding claim, wherein said blades (11) have a twisted shape.

18. Device according to any preceding claim, wherein said supplying means (3) comprises conduit means (5; 5', 5") connected to tank means (30, 31) and/or to a mains water supply (38) of said liquid (10) and is arranged for pouring said liquid (10) onto said blades (11).

19. Device according to claim 18, as appended to claim 12, wherein said conduit means comprises at least a conduit (5) provided with an outlet end (5a) of said liquid (10), said outlet end (5a) being positioned inside said blading defined by said blades (11).

20. Device according to claim 19, wherein said conduit (5) comprises at said outlet end (5a) nozzle means having a calibrated passage section for dispensing a determined flow of liquid (10).

21. Device according to any preceding claim, wherein said liquid (10) to be nebulized is water to be vaporised on heating means (22) of said oven (20) so as to adjust a quantity of steam in said cooking chamber (21).

22. Device according to any one of claims 1 to 20, wherein said liquid to be nebulized is a washing liquid for cleaning and/or sanitising internal surfaces of said cooking chamber (21).

23. Device according to claim 22, wherein said washing liquid is water and/or detergent liquid and/or polishing liquid.

24. Combined convection and steam oven comprising the nebulizing device (1) according to claims 1 to 23.
